Europäisches Patentamt

European Patent Office

Office européen des brevets

(11) Publication number: **0 240 159**
**A1**

# EUROPEAN PATENT APPLICATION

(21) Application number: 87301765.1

(22) Date of filing: 27.02.87

(51) Int. Cl.⁴: **B23P 19/04**

(30) Priority: 28.02.86 AU 4826/86

(43) Date of publication of application:
07.10.87 Bulletin 87/41

(84) Designated Contracting States:
AT BE CH DE ES FR GB GR IT LI LU NL SE

(71) Applicant: **TEE-SERT PTY LTD.**
**161 Magowar Road**
**Girraween New South Wales 2145(AU)**

(72) Inventor: **Rotherham, Alan Charles**
**161 Magowar Road**
**Girraween New South Wales 2145(AU)**

(74) Representative: **Beresford, Keith Denis Lewis**
**et al**
**BERESFORD & Co. 2-5 Warwick Court High**
**Holborn**
**London WC1R 5DJ(GB)**

(54) Machine for inserting and securing nuts.

(57) A machine for inserting and securing nuts of the type comprising a body portion (79) adapted to be received in an aperture in a workpiece and with a threaded bore (80) therein and a toothed anchorage flange (78) therearound, comprises a body (11), nut supply means (13) mounted on the body and adapted to locate the nut (77), at least one at a time, at a holding location (38), and an insertion assembly (12) including transfer means (40, 46) to transfer the nut (77) from the holding location (38) to an insertion location (36) and motor means (20) engageable on the nut at the insertion location to apply a force to insert the nut in the aperture and secure the flange (78) to the workpiece. The nuts may be moved from the holding location to the insertion location by an air jet.

FIG.2

FIG.6

## MACHINE FOR INSERTING AND SECURING NUTS

The present invention relates to a machine for inserting and securing nuts of the type comprising a body portion adapted to be received in an aperture in a workpiece and with a threaded bore therein and a toothed anchorage flange therearound.

In the construction of furniture, nuts of this type, known as "T-Nuts", are employed to secure various parts of the pieces of furniture together. Each of these T-Nuts consists of a generally cylindrical base defining a passage which is threaded, from which there extends an annular flange having projections (spikes) which are engaged within a piece of timber when the base is located within a hole preformed in the piece of timber. Traditionally these T-Nuts have been inserted by hand using a hammer.

The manual insertion of T-Nuts is time-consuming and labour intensive, and is therefore costly.

According to the present invention the machine is characterised in that it comprises a body, nut supply means mounted on the body and adapted to locate the nut, at least one at a time, at a holding location, and an insertion assembly including transfer means to transfer the nut from the holding location to an insertion location and motor means engageable on the nut at the insertion location to apply a force to insert the nut in the aperture and secure the flange to the workpiece.

A preferred form of the present invention will now be described by way of example with reference to the accompanying drawings, wherein:

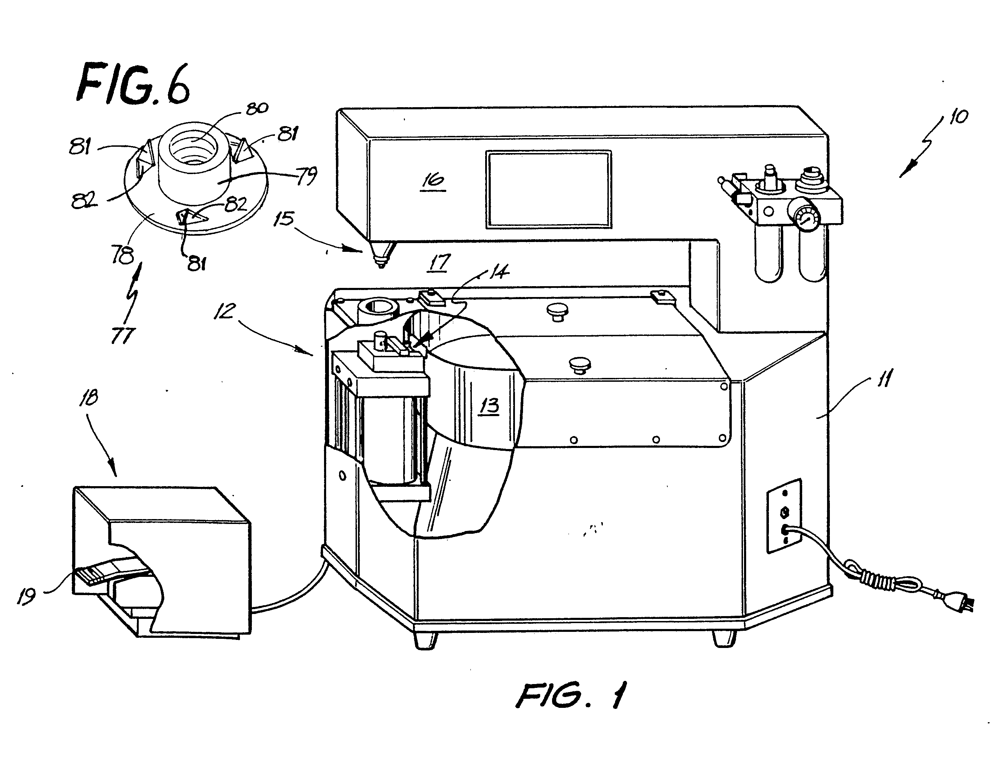

Fig. 1 is a schematic perspective view of a machine in accordance with the invention;

Fig. 2 is a schematic parts exploded view of a pneumatic ram and nut delivery assembly employed in the machine of Figure 1;

Fig. 3 is a schematic parts exploded perspective view of the piston assembly of the pneumatic ram of Figure 2;

Fig. 4 is a schematic parts exploded perspective view of a locating pin assembly and safety switch employed in the machine of Figure 1;

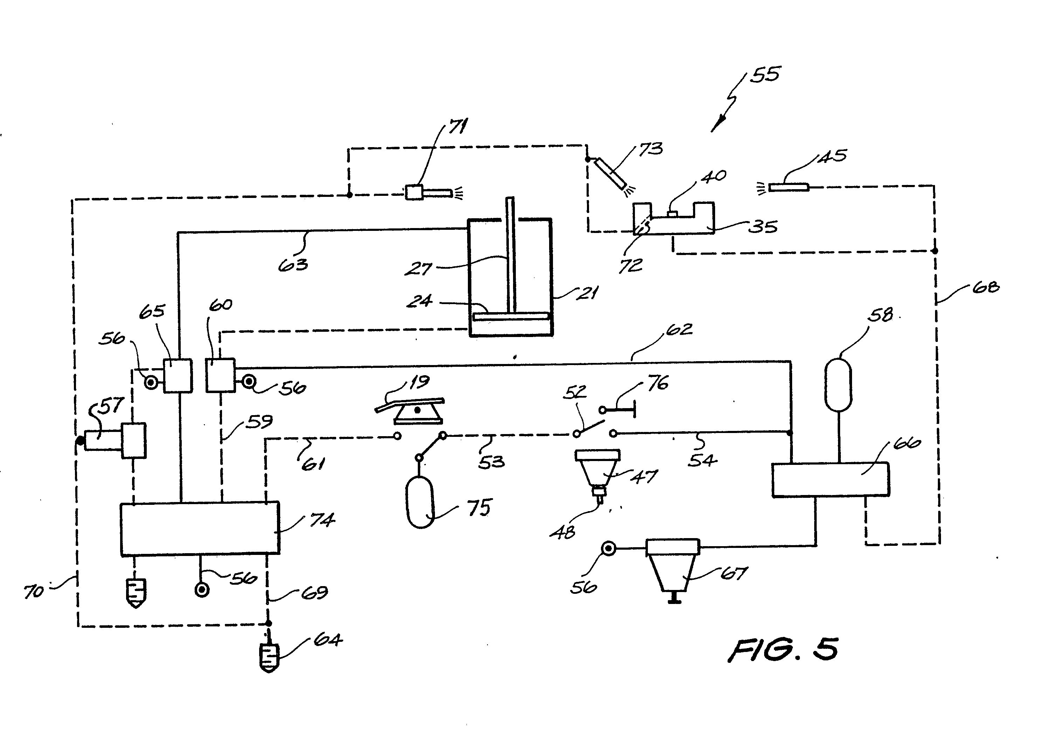

Fig. 5 is a schematic pneumatic circuit diagram for the machine of Figure 1; and

Fig. 6 is an enlarged perspective view of a T-Nut.

In Figure 6 there is illustrated a T-Nut 77 having a cylindrical body portion or base and an annular flange 78. The base 79 provides a threaded passage 80. Punched from the flange 78 are spikes 81, so that holes 82 are formed. In use the base 79 is received in a circular hole formed in a piece of timber. The spikes 81 are driven into the timber to secure the T-Nut 77 in position.

In the accompanying drawings there is - schematically depicted a T-Net insertion machine 10 having a body 11 housing an insertion assembly 12. The assembly 12 receives T-Nuts from a vibratory feeder 13 which delivers T-Nuts in a particular orientation to the opening 14. Also mounted on the body 11 is a locating pin assembly switch 15 vertically aligned with the insertion assembly 12. As can be noted the locating assembly 12 and safety switch 15 are mounted on an arm 16 below which there is defined a recess 17 into which a timber product is introduced. The timber product has a aperture which receives the body portion 79 of the T-Nut to be inserted by the insertion assembly 12. Controlling the operation of the assembly 12 is an operator station 18 having a pedal 19 manipulated by the operator.

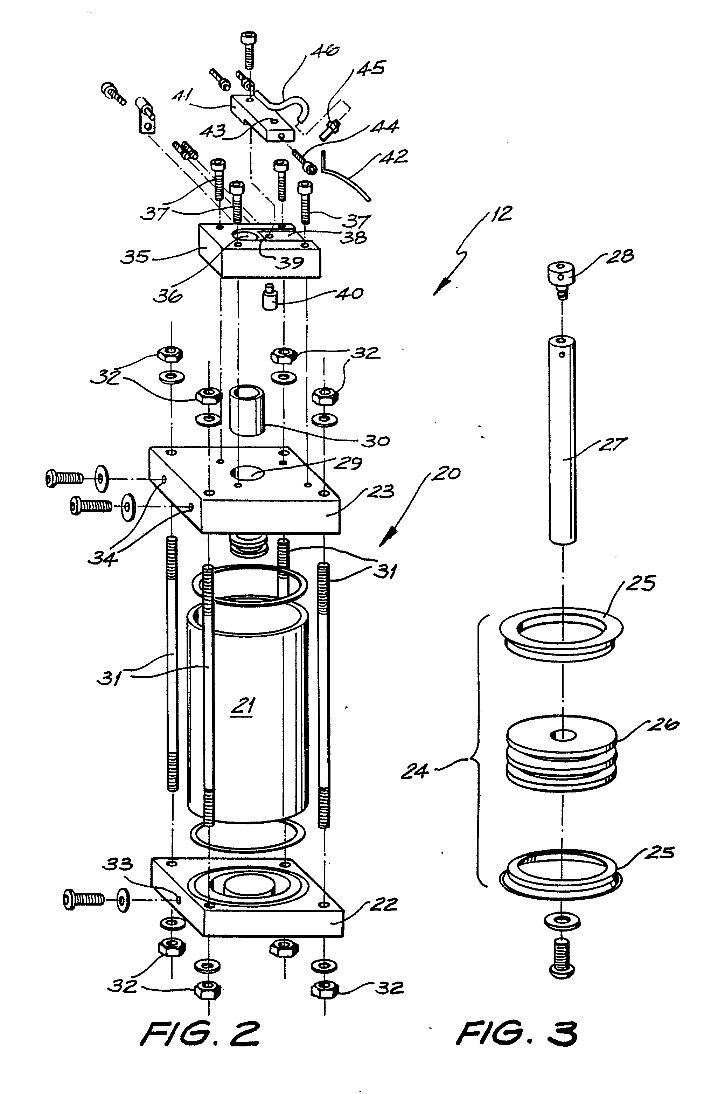

Turning now in particular to Figures 2 and 3, wherein the insertion assembly 12 is more fully depicted in a parts exploded perspective view, the assembly 12 includes a pneumatic ram 20 having a cylinder 21 closed at each end by plates 22 and 23. Located within the cylinder 21 is a piston assembly 24 including seals 25 and piston 26. Extending upwardly from the piston 26 and attached thereto is a piston rod 27 terminating at is upper end with a locator member 28. The piston assembly 24 sealingly divides the pneumatic chamber within the cylinder 21 into upper and lower sub-chambers. The end plate 23 is provided with a central passage 29 through which the piston rod 27 sealingly passes via a bush 30. The two end plates 22 and 23 are held in position by means of threaded rods 31 and nuts 32. Air is delivered to the interior of the cylinder 21 by means of passages 33 and 34.

Mounted on the plate 23 is a T-Nut delivery member 35 having a passage 30 through which the rod 27 and member 28 pass to engage a T-Nut to force the T-Nut into the piece of timber positioned thereabove. The member 35 is secured to the plate 23 by means of bolts 37. Extending in from one edge of the member is a holding slot 38 which delivers the T-Nut to a position partly projecting into the passage 36 and resting on top of the locating member 28. The slot 38 has an upwardly extending step 39 against which the T-Nut abuts prior to delivery to a position above the passage 36. Formed in the member 36 is a passage which receives a piston 40. The piston 40 is air driven and raises the T-Nut over the step 39.

Located above the piston 40 is a stop member 41 which in co-operation with the slot 38 defines a space within which a T-Nut is located prior to being delivered to the passage 36. Mounted on the stop member 41 is a wire 42 which projects into the opening 14 to guide the T-Nuts from within the vibratory feeder 13 to the slot 38. The wire 42 has one end received within a passage 43 and is clamped in position by means of a screw 44. Also mounted on the stop member 41 is a nozzle 45 which directs air to engage the T-Nut abutting the step 39. The nozzle 45 is mounted on a rigid tube 46 fixed to the member 4l.

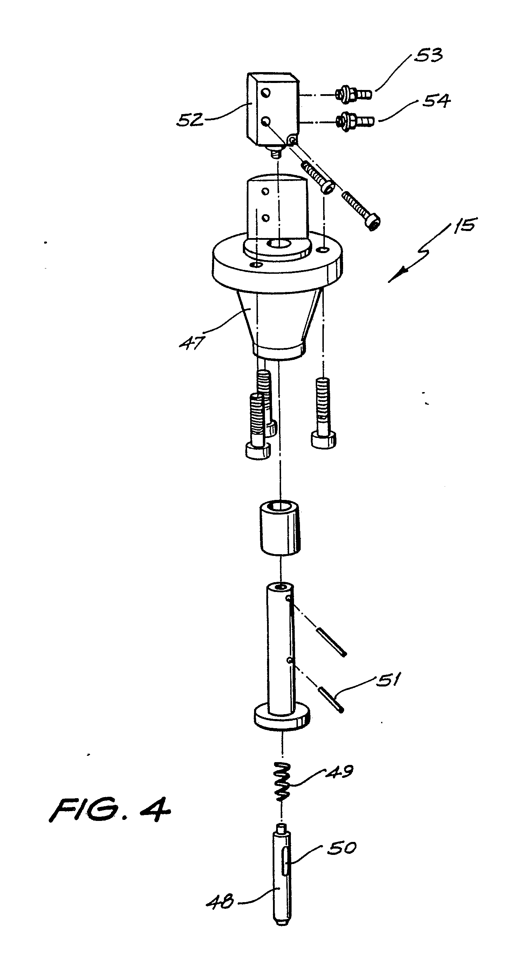

Turning now to Fig. 4 wherein the locator pin assembly 15 and safety switch 15 is more fully depicted, the assembly 15 includes a main body 47 within which there is mounted a movable piston 48 biassed to an extended position by means of a spring 49. The piston 48 is retained in position by means of a slot 50 engaged by a pin 51. The piston 48 operates a swtich 52 to selectively connect pneumatic lines 53 and 54. More particularly, upon the piston 48 being moved to a retracted position, the lines 53 and 54 are connected to allow the flow of compressed air therebetween.

Turning now to the pneumatic circuit 55 wherein the various pneumatic components of the machine 10 are schematically depicted, the pneumatic circuit 55 includes main pressure supply lines 56 and reservoirs 75 and 58. The reservoir 75 stores sufficient compressed air to actuate, once only per charge, to operate a main spool valve 74. Thereafter mains pressure air is delivered to the line 59 via a port sensor 60 to one end of the cylinder 21 to cause the piston rod 27 to rise and insert a T-Nut located in the passage 36. Once the spool valve has been actuated by the delivery of the charge of air from the reservoir 75 to the line 61, by the depression of the pedal 19, the spool valve 74 remains in the activated position. While air is passing through the line 59, the port sensor 60 isolates the line 62 from the main air supply 56. Once the piston 24 has reached its uppermost limit, the port sensor 60 allows the delivery of main pressure air to the line 62. Air is exhausted from above the piston 24 via line 63. This exhaust air is delivered via valve 74 to a silencer 64. Located in the line 63 is a port sensor 65 which delivers main pressure air to a timer valve 57 when air ceases to flow through the line 63. The timer valve 57 after a predetermined period of time delivers air to the valve 74 to move the valve 74 to the start position. Again it should be appreciated that the port sensor 65 only delivers air to the timer valve 57 when air ceases to flow through the line 63.

The reservoir 75 is charged upon air being delivered to the line 62 and then subsequently to the line 54. Air delivered to the line 62 also operates the injection valve 66 so that air is selectively delivered to the reservoir 67. Additionally, the valve 66 selectively delivers a charge of air from the reservoir 58 to the line 68.

Communicating with the line 68 is the piston 40 which raises the T-Nut over the step 39. Also communicating with the line 68 is the injector nozzle 45 which moves the raised T-Nut to a position partly projecting into the passage 36 and resting on the member 28. Extending from the valve 74 to the silencer 64 is a line 69. Extending from the line 69 is a further line 70 which delivers exhaust air to a first reject nozzle 71 and a second reject nozzle 72. The reject nozzle 72 is formed in the delivery member 35. This exhaust air passing through the line 70 is also delivered to a feeder nozzle 73. The feeder nozzle aids in moving the T-Nut from the opening 14 to a position abutting the step 39. The ejector nozzle 71 removes a T-Nut still located on the member 28 after a completed stroke of the piston rod 27, if such a problem has occurred. The ejector nozzle 72 removes a T-Nut from the position adjacent the step 39, if the T-Nut has not been moved by the nozzle 45 to a position on top of the member 28.

In operation of the above described pneumatic circuit, air is delivered to the reservoir 75 upon the piston 48 being engaged by a piece of wood moved by the operator. Upon the piston 48 being moved to a retracted position air is delivered from the line 54 to 53. It should be further be noted that air can only be delivered to the line 54 if the piston 24 is stationary, that is the piston 24 would have to be at the top or bottom of its stroke. Air from the line 53 is automatically fed to the reservoir 75. Upon the operator depressing the pedal 19 air from the reservoir is delivered as control air to operate the valve 74. The valve 74 is moved to the operative position wherein main pressure air is delivered from the line 56 to the lower surface of the piston 24, via the port sensor 60. While air is passing through the port sensor 60, air is no longer delivered to the line 54. Upon the piston 24 reaching the top of its stroke and exhaust air ceasing to flow through the line 63, main pressure air is delivered to the timer valve 57 which will subsequently cause operation of the valve 74 to return the valve 74 to the start position. Thereafter main pressure air is delivered to the line 63 to return the piston 24 to its start position. During this operation exhaust air then passes through the line 59 to be exhausted via the line 69 to the silencer 64. However, during this operation part of the exhaust air is delivered to the line 70 to operate the nozzles 71, 72 and 73. It should further be appreciated that when main pressure is delivered to the line 62, the valve 66 is operated so that air in the reservoir 58 is delivered to the line 68. In the rest position, the valve 66 delivers air from the regulator 67 to the reservoir 58. The piston 48 and switch 52 act as a safety switch in that if the piston 48 is not retracted by the operator inserting a piece of wood in the appropriate position, the switch 52 dumps air from the reservoir 75 via line 76 to atmosphere.

If so required several locating members 28 can be provided, and being of different sizes. This then allows the operator to select the locating member 28 to suit the particular sized T-Nut being used.

As a further adjustment, the timer valve 57 can be altered to suit different materials into which the T-Nuts are being inserted.

## Claims

1. A machine for inserting and securing nuts of the type comprising a body portion (79) adapted to be received in an aperture in a workpiece and with a threaded bore (80) therein and a toothed anchorage flange (78) therearound, characterised in that the machine (10) comprises a body (11), nut supply means (13) mounted on the body and adapted to locate the nut (77), at least one at a time, at a holding location (38), and an insertion assembly (12) including transfer means (40, 46) to transfer the nut (77) from the holding location (38) to an insertion location (36) and motor means (20) engageable on the nut at the insertion location to apply a force to insert the nut in the aperture and secure the flange (78) to the workpiece.

2. A machine according to claim 1, characterised in that the holding location comprises a slot (38) along which a nut (77) may be moved, and the transfer means (40, 46) include a nozzle (45) to direct an air jet at the nut (77) to move the nut from the holding location (38) to the insertion location (36).

3. A machine according to claim 2, characterised in that the holding location is defined by a step (39) terminating the slot (38), and against which the nut (77) is abutted, and the transfer means (40, 46) further includes lifting means (40) to raise the nut above the step (39) so that air from the nozzle (45) can move the nut (77) to the insertion location (36).

4. A machine according to claim 3, characterised in that the lifting means includes a piston (40) which engages the nut (77) and which is movable from a retracted position to a raised position locating the nut above the step (39).

5. A machine according to any preceding claim, wherein the motor means comprises a ram (20) having a piston (24) movable between a retracted position and an extended position, the nut being inserted and secured by movement of the piston (24) between the extended and retracted positions by movement through the insertion location (36).

**FIG.6**

80
81
81
82
79
82
78
81
77

16
15
17
14
10
12
13
11
18
19

0 240 159

**FIG. 1**

FIG. 2

FIG. 3

FIG. 4

FIG. 5

0 240 159

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US - A - 4 633 560 (MULTIFASTENER CORP.)<br><br>* Claim 9; sheet 14; column 20, lines 47-66; column 21, lines 20-33 * | 1,2,5 | B 23 P 19/04 |
| X | DE - A1 - 3 446 978 (PROFIL-VER-BINDUNGSTECHNIK)<br><br>* Claims 1,8,13; fig. 1,14,15 * | 1,2,5 | |
| A | DD - A1 - 239 978 (VEB FUNKWERK KOPENICK)<br><br>* Claim 1 * | 2 | |
| A | US - A - 3 528 157 (MC GEE)<br><br>* Abstract; column 2, lines 70-72; claims 1,5,9 * | 1,2,5 | TECHNICAL FIELDS SEARCHED (Int. Cl.4) |
| A | US - A - 4 164 072 (YUGENKAISHA SHINJO)<br><br>* Claim 1; lines 20-44; page 3, lines 16-45 * | 1,2,5 | B 23 P 11/00<br>B 23 P 19/00<br>B 25 B 23/00 |
| A | US - A - 2 398 659 (MEAD)<br><br>* Fig. 1; page 2, lines 43-60 * | 2 | |

The present search report has been drawn up for all claims

| Place of search | Date of completion of the search | Examiner |
|---|---|---|
| VIENNA | 09-06-1987 | BISTRICH |